# EUROPEAN PATENT APPLICATION

(11) **EP 3 647 171 A1**
(43) Date of publication of application: **06.05.2020**
(21) Application number: 19194953.6
(22) Date of filing: 02.09.2019
(51) Int. Cl.: B62J 15/02

(54) **MUDGUARD FIXING DEVICE**

(30) Priority: 30.10.2018 TW 107138416
(71) Applicant: Sunny Wheel Industrial Co., Ltd., Chang Hua, Hsien 50442 (TW)
(72) Inventor: HSU, Kuo-Chung, 50442 Changhua Hsien (TW)
(74) Representative: Stöckeler, Ferdinand

(57) **Abstract**

A mudguard fixing device includes a fixing unit (5) and a strut unit (6). The fixing unit (5) includes a hollow main body (511) having an insertion space (510), a U-shaped slot (512) and a flexible portion (513) . The U-shaped slot (512) is disposed at a lateral side of the main body (511), and is in spatial communication with the insertion space (510). The flexible portion (513) is surrounded by the U-shaped slot (512), and has an engaging segment (515) that protrudes into the insertion space (510). The strut unit (6) includes at least one strut member (61) that has a curved portion (611) removably inserted into the insertion space (510) . The flexible portion (513) is deformable to move the engaging segment (515) out of the insertion space (510) so as to allow withdrawal of the curved portion (611) from the insertion space (510).

## Description

This application claims priority of Taiwanese Patent Application No. 107138416, filed on October 30, 2018.

The disclosure relates to a mudguard fixing device, and more particularly to a mudguard fixing device adapted for securing a mudguard onto a vehicle.

Referring to FIGS. 1 and 2, a conventional fixing device 1 disclosed in Taiwanese Patent No. 323993 includes a linking member 11, two supporting rods 12 fixedly and respectively connected between the linking member 11 and a mudguard 21 of a bicycle 2, and an insertion member 13 fixedly connected to a fork 22 of the bicycle 2. The linking member 11 has an insertion slot 111, and a lateral opening 112 that is in spatial communication with the insertion slot 111. The insertion member 13 is detachably inserted in the insertion slot 111, and has a protruding portion 131 tightly fitted in the opening 112. When the bicycle 2 is subjected to a significant force of impact, the protruding portion 131 of the insertion member 13 is to be moved out of the opening 112, so that the insertion member 13 can be separated from the linking member 11 for mitigating damage to the supporting rods 12 or the mudguard 21 due to the force of impact.

However, such structure is relatively rigid without flexibility and may fail to function as expected, that is, since the connection between the insertion member 13 and the linking member 11 is a tight fit, the protruding portion 131 of the insertion member 13 may fit too tightly in the opening 112 of the linking member 11 such that the insertion member 13 fails to be detached from the linking member 11 in cases of impact; on the other hand, if the insertion slot 111 is enlarged to ensure that the insertion member 13 is separable from the linking member 11 in the cases of impact, the connection therebetween may instead be too weak, and the fixing device 1 may easily fall apart.

Therefore, the object of the disclosure is to provide a mudguard fixing device that can alleviate at least one of the drawbacks of the prior art.

According to the disclosure, a mudguard fixing device adapted for securing a mudguard onto a vehicle includes a fixing unit and a strut unit.

The fixing unit is adapted to be connected to the mudguard, and includes at least one fixing member that includes a hollow main body. The main body has an outer surface and an inner surface that is opposite to the outer surface and that defines an insertion space. The insertion space has an open end and a blind end which are opposite to each other along an axis. The main body further has a U-shaped slot and a flexible portion. The U-shaped slot is disposed at a lateral side of the axis, extends from the outer surface to the inner surface, and is in spatial communication with the insertion space. The flexible portion is surrounded by the U-shaped slot, and has an engaging segment that protrudes into the insertion space.

The strut unit includes at least one strut member that is adapted for interconnecting the main body of the at least one fixing member of the fixing unit and the vehicle. The at least one strut member has a curved portion and an elongated strut leg. The curved portion is removably inserted into the insertion space of the at least one fixing member, is disposed between the engaging segment of the flexible portion of the main body and the blind end of the insertion space, and has an inner curved surface abutting removably against the engaging segment. The flexible portion is deformable to move the engaging segment out of the insertion space so as to allow withdrawal of the curved portion from the insertion space. The elongated strut leg is adapted to be connected to the vehicle. The curved portion and the strut leg are molded as one piece.

Other features and advantages of the disclosure will become apparent in the following detailed description of the embodiment with reference to the accompanying drawings, of which:

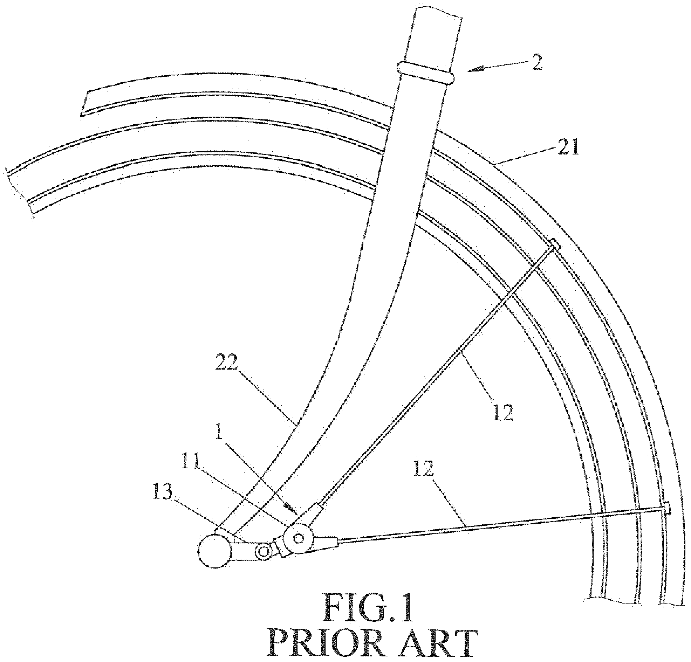

FIG. 1 is a side view of a conventional fixing device disclosed in Taiwanese Patent No. 323993;

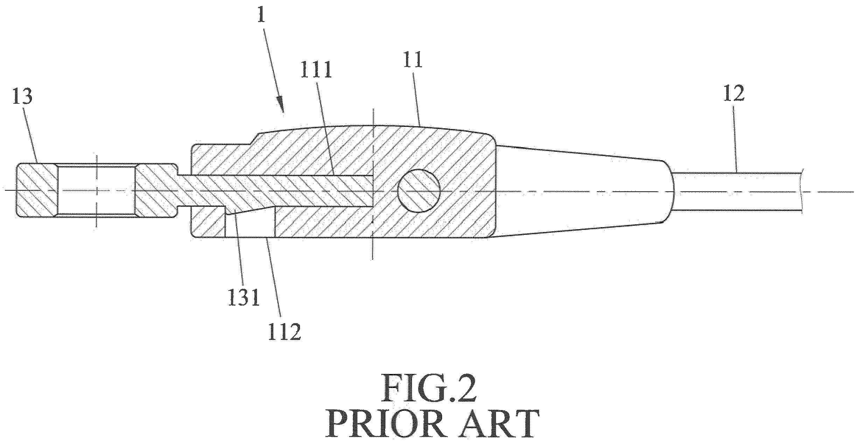

FIG. 2 is a fragmentary sectional view of the conventional fixing device;
FIG. 3 is a side view illustrating an embodiment of a mudguard fixing device according to the disclosure adapted for securing a mudguard onto a vehicle;
FIG. 4 is a fragmentary partly exploded perspective view, illustrating the embodiment and the mudguard;
FIG. 5 is an assembled perspective view, illustrating the embodiment and the mudguard;
FIG. 6 is a fragmentary sectional view taken along line VI-VI in FIG. 3;
FIG. 7 is a fragmentary sectional view taken along line VII-VII in FIG. 6; and
FIG. 8 is a fragmentary sectional view of the embodiment, illustrating an engaging segment of a fixing member being moved out of an insertion space and being separated from a curved portion of a strut member.

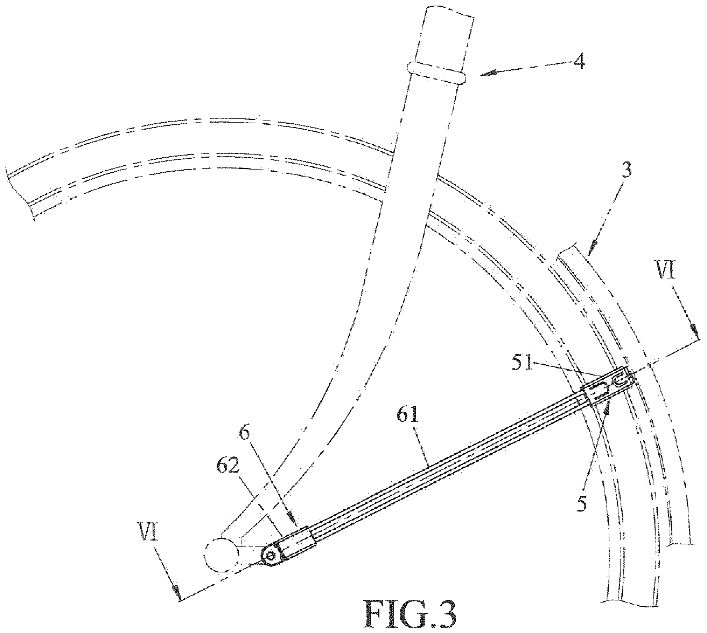

Referring to FIG. 3, an embodiment of a mudguard fixing device according to the disclosure is adapted for securing a mudguard 3 onto a vehicle 4. In the present embodiment, the vehicle 4 is a bicycle. The mudguard fixing device includes a fixing unit 5 and a strut unit 6.

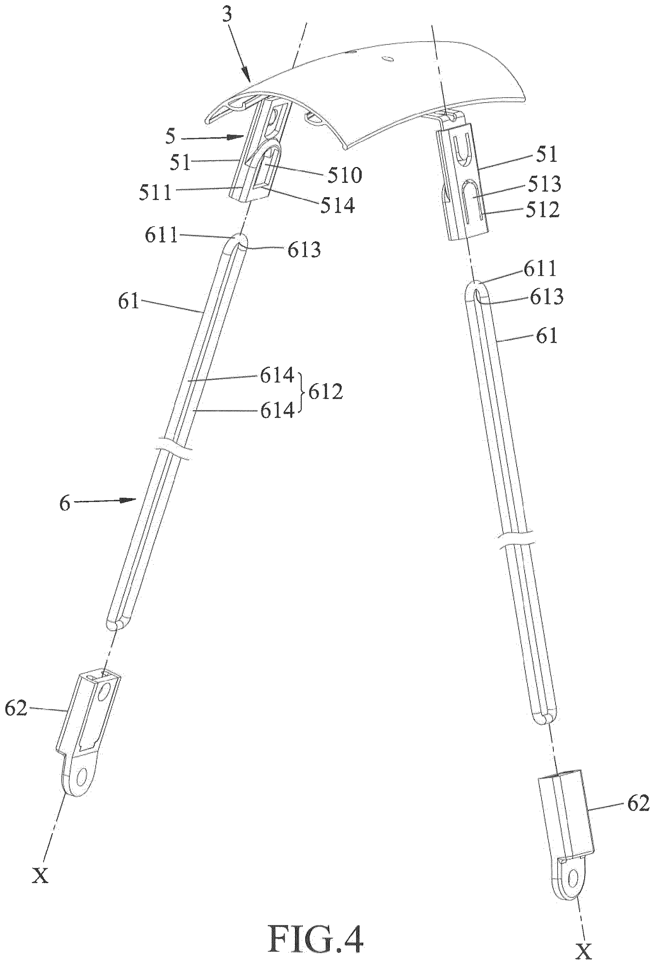

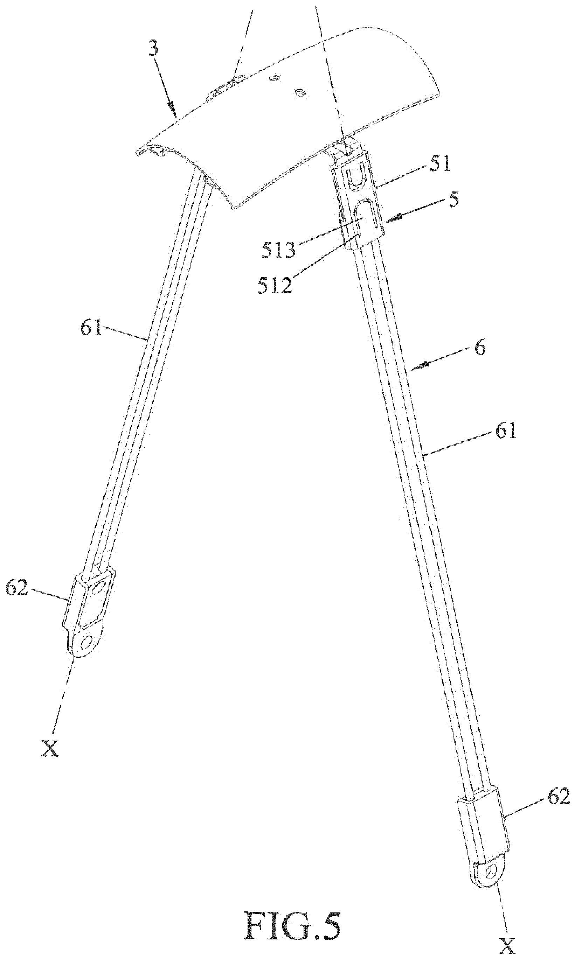

Referring to FIGS. 3, 4 and 5, in this embodiment, the fixing unit 5 is adapted to be connected to the mudguard 3, and includes two fixing members 51 that are spaced apart from each other. The structures of the fixing members 51 are symmetric to each other.

Each of the fixing members 51 includes a hollow main body 511. The main body 511 has an outer surface and an inner surface that is opposite to the outer surface and that defines an insertion space 510. The insertion space 510 of one of the fixing members 51 has an open end and a blind end that are opposite to each other along an axis (X). The insertion space 510 of the other one of the fixing members 51 has an open end and a blind end that are opposite to each other along another axis (X'). The main body 511 further has a U-shaped slot 512 and a flexible portion 513, and is formed with an opening 514. For the one of the fixing members 51, the U-shaped slot 512 is disposed at a lateral side of the axis (X), extends from the outer surface to the inner surface, and is in spatial communication with the insertion space 510. The flexible portion 513 is surrounded by the U-shaped slot 512, and has an engaging segment 515 that protrudes into the insertion space 510 and that has a curving peripheral end 516. The flexible portion 513 is outwardly deformable to move the engaging segment 515 out of the insertion space 510. The opening 514 is disposed at an opposite lateral side of the axis (X), extends from the outer surface to the inner surface, is in spatial communication with the insertion space 510, and is registered with the engaging segment 515 of the flexible portion 513 of the main body 511.

In this embodiment, the strut unit 6 includes two strut members 61 and two connecting members 62.

Each of the strut members 61 is adapted for interconnecting the vehicle 4 and the main body 511 of a respective one of the fixing members 51.

Each of the strut members 61 has a curved portion 611 and an elongated strut leg 612 that are molded as one piece. The curved portion 611 is formed as a curved cylinder and has a circular cross-section. The curved portion 611 is removably inserted into the insertion space 510 of a respective one of the fixing members 51, is disposed between the engaging segment 515 of the flexible portion 513 of the main body 511 and the blind end of the insertion space 510, and has an inner curved surface 613 abutting removably against the engaging segment 515. The curved portion 611 is allowed to be withdrawn from the insertion space 510 when the flexible portion 513 is deformed and moves the engaging segment 515 out of the insertion space 510.

The strut leg 612 is adapted to be connected to the vehicle 4, and includes two rods 614 spaced apart from each other, and connected respectively to opposite ends of the curved portion 611.

Each of the connecting members 62 has one end that is fixedly connected to the rods 614 of the strut leg 612 of a respective one of the strut members 61, and an opposite end that is adapted to be connected to the vehicle 4.

It should be noted that, in other embodiments of the disclosure, the rods 614 of the strut leg 612 may be configured as one piece of elongated plate.

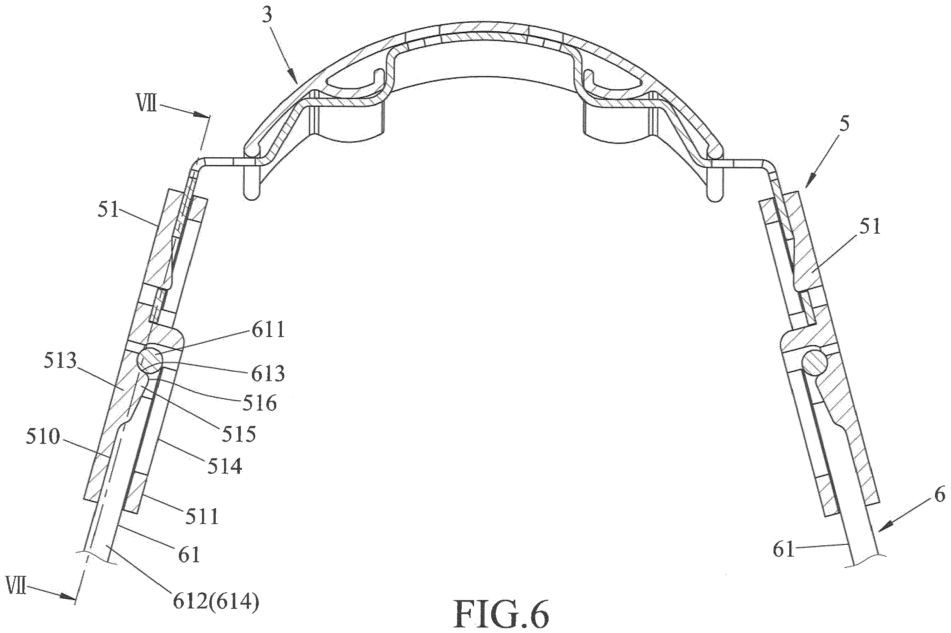

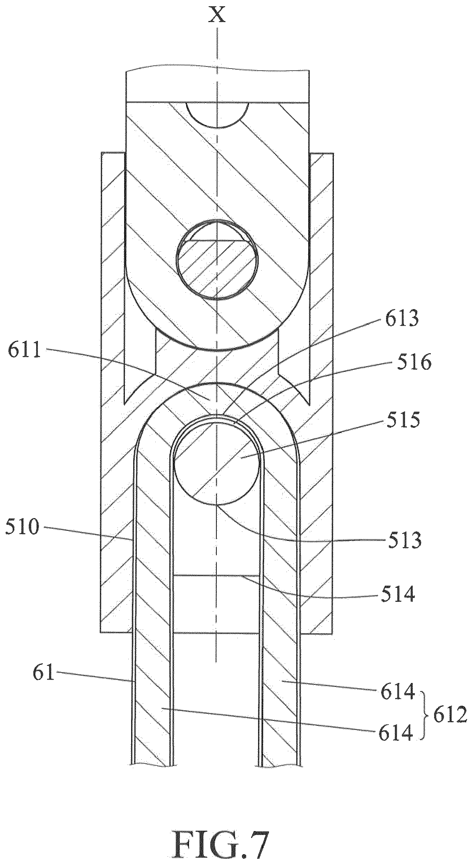

Referring to FIGS. 6 and 7, for the sake of brevity, only one of the fixing members 51 and one of the strut members 61 are mentioned in the following description. To connect the strut member 61 to the fixing member 51, the curved portion 611 of the strut member 61 is inserted into the insertion space 510 of the fixing member 51. At the time of insertion, the engaging segment 515 of the flexible portion 513 of the fixing member 51 is pushed by the curved portion 611, such that the flexible portion 513 is deformed in a direction away from the insertion space 510 to move the engaging segment 515 out of the insertion space 510. Then, the curved portion 611 is able to pass by the engaging segment 515 and be proximate to the blind end of the insertion space 510. As the curved portion 611 passes by the engaging segment 515, the flexible portion 513 moves resiliently back into the insertion space 510 so that the inner curved surface 613 abuts against the engaging segment 515 to prevent the curved portion 611 from moving out of the insertion space 510, thereby securing the connection between the fixing member 51 and the strut member 61.

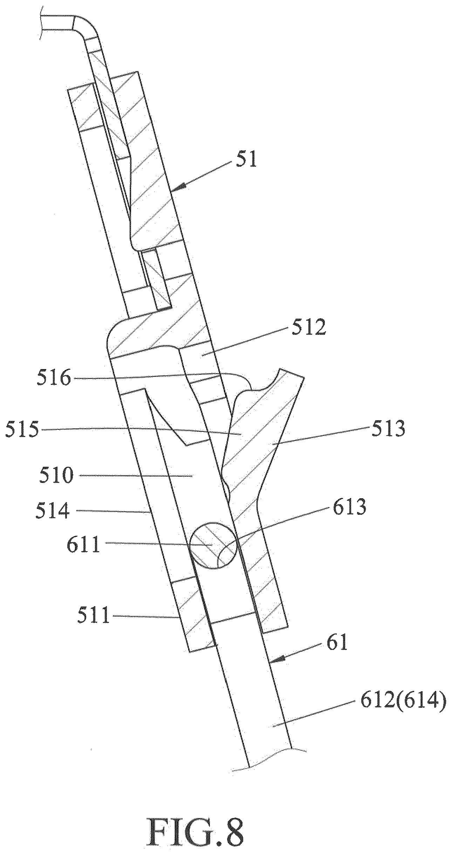

Referring to FIGS. 3, 7 and 8, when the vehicle 4 is subjected to a significant force of impact that exceeds a threshold, the strut member 61 is pulled by an external force, such that the curved portion 611 forcibly pushes the engaging segment 515 of the flexible portion 513, thereby deforming the flexible portion 513 in the direction away from the insertion space 510 to once again move the engaging segment 515 out of the insertion space 510. By virtue of the curving surface of the curving peripheral end 516, the inner curved surface 613 of the curved portion 611 then glides smoothly across the surface of the curving peripheral end 516, so that the curved portion 611 is withdrawn from the insertion space 510 and the strut member 61 is separated from the fixing member 51. In such a manner, probability of the strut member 61 or the mudguard 3 being damaged due to the force of impact is reduced.

It should be noted that, the flexible portion 513 may also be manually pushed outwardly through the opening 514 of the fixing member 51, so that the strut member 61 may be pulled and separated from the fixing member 51 in a same manner as mentioned above.

Therefore, the present embodiment of the disclosure has advantages of being relatively more stable yet flexible. In other words, the connection between the fixing member 51 and the strut member 61 is secure enough to withstand regular usage, yet when the mudguard fixing device is subjected to a significant force of impact, the flexible portion 513 of the fixing member 51 is flexible enough to allow the curved portion 611 of the strut member 61 to be separated from the fixing member 51, to further prevent damage to the strut member 61 or the mudguard 3.

In the description above, for the purposes of explanation, numerous specific details have been set forth in order to provide a thorough understanding of the embodiment. It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects, and that one or more features or specific details from one embodiment may be practiced together with one or more features or specific details from another embodiment, where appropriate, in the practice of the disclosure.

## Claims

1. A mudguard fixing device adapted for securing a mudguard (3) onto a vehicle (4), said mudguard fixing device including:
a fixing unit (5) adapted to be connected to the mudguard (3), and including at least one fixing member (51) that includes a hollow main body (511), said main body (511) having an outer surface and an inner surface that is opposite to said outer surface and that defines an insertion space (510), said insertion space (510) having an open end and a blind end which are opposite to each other along an axis; and
a strut unit (6) including at least one strut member (61) that is adapted for interconnecting said main body (511) of said at least one fixing member (51) of said fixing unit (5) and the vehicle (4);
**characterized in that**:
said main body (511) of said at least one fixing member (51) of said fixing unit (5) further has
a U-shaped slot (512) disposed at a lateral side of the axis, extending from said outer surface to said inner surface and being in spatial communication with said insertion space (510), and
a flexible portion (513) surrounded by said U-shaped slot (512), and having an engaging segment (515) that protrudes into said insertion space (510); and
said at least one strut member (61) has
a curved portion (611) that is removably inserted into said insertion space (510) of said fixing member (51), that is disposed between said engaging segment (515) of said flexible portion (513) of said main body (511) and said blind end of said insertion space (510), and that has an inner curved surface (613) abutting removably against said engaging segment (515), said flexible portion (513) being deformable to move said engaging segment (515) out of said insertion space (510) so as to allow withdrawal of said curved portion (611) from said insertion space (510), and
an elongated strut leg (612) that is adapted to be connected to the vehicle (4), said curved portion (611) and said strut leg (612) being molded as one piece.

2. The mudguard fixing device as claimed in claim 1, **characterized in that** said main body (511) of said at least one fixing member (51) is formed with an opening (514) disposed at an opposite lateral side of the axis, extending from said outer surface to said inner surface, being in spatial communication with said insertion space (510), and registered with said engaging segment (515) of said flexible portion (513) of said main body (511) .

3. The mudguard fixing device as claimed in any one of claims 1 and 2, further **characterized in that** said engaging segment (515) of said at least one fixing member (51) has a curving peripheral end (516).

4. The mudguard fixing device as claimed in claim 3, further **characterized in that** said curved portion (611) of said at least one strut member (61) is formed as a curved cylinder and has a circular cross-section.

5. The mudguard fixing device as claimed in any one of the previous claims, further **characterized in that** said strut leg (612) of said at least one strut member (61) includes two rods (614) spaced apart from each other, and connected respectively to opposite ends of said curved portion (611).

6. The mudguard fixing device as claimed in claim 5, further **characterized in that** said strut unit (6) further includes a connecting member (62) having one end that is fixedly connected to said rods (614) of said strut leg (612) of said at least one strut member (61), and an opposite end that is adapted to be connected to the vehicle (4).

7. The mudguard fixing device as claimed in claim 1, further **characterized in that**:
said fixing unit (5) includes two of said fixing members (51) spaced apart from each other;
said strut unit (6) includes two of said strut members (61); and
said curved portion (611) of each of said strut members (61) is connected to a respective one of said fixing members (51).

8. The mudguard fixing device as claimed in claim 7, further **characterized in that** said strut unit (6) further includes two connecting members (62), each of said connecting members (62) having one end that is fixedly connected to said strut leg (612) of a respective one of said strut members (61), and an opposite end that is adapted to be connected to the vehicle (4).
